Europäisches Patentamt

European Patent Office

Office européen des brevets

(11) Veröffentlichungsnummer: **0 463 345 A2**

# (12) EUROPÄISCHE PATENTANMELDUNG

(21) Anmeldenummer: **91107830.1**

(22) Anmeldetag: **15.05.91**

(51) Int. Cl.5: **G11B 5/00, G11B 5/187**

(30) Priorität: **27.06.90 DE 4020353**

(43) Veröffentlichungstag der Anmeldung:
**02.01.92 Patentblatt 92/01**

(84) Benannte Vertragsstaaten:
**AT DE FR GB IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Bratenstein, Ernst, GRUNDIG E.M.V.,**
**Max Grundig**
**holländ. Stiftung & Co. KG.,**
**Kurgartenstrasse 37**
**W-8510 Fuerth(DE)**

(74) Vertreter: **Dreykorn-Lindner, Werner, Dipl.-Ing.**
**GRUNDIG E.M.V. Elektro-Mechanische**
**Versuchsanstalt Max Grundig**
**holländ.Stiftung & Co. KG Lizenz- und**
**Patentabteilung Kurgartenstrasse 37**
**W-8510 Fürth/Bayern(DE)**

(54) **Verfahren zur Verbesserung der elektromechanischen Eigenschaften von Magnetköpfen und kompletten Magnetkopfanordnungen.**

(57) Es wird ein Verfahren beschrieben, mit dem die elektromechanischen Eigenschaften von Köpfen oder Kopfrädern von magnetischen Aufzeichnungsgeräten in der Weise verbessert werden, daß das zeitlich begrenzte, Bildstörungen verursachende Schwingen an der Berührungsstelle Band/Kopf, das als "Rubbing Noise-Effekt" bekannt ist, vermieden wird. Erreicht wird diese Verbesserung durch eine Schwingungsbelastung des Kopfes mit Anregung von außen, zum Beispiel mittels Ultraschall.

Bereits im Betrieb befindliche Geräte, bei denen der Rubbing Noise-Effekt auftritt, können mit diesem Verfahren repariert werden.

EP 0 463 345 A2

Die Erfindung betrifft ein Verfahren zur Verbesserung der elektromechanischen Eigenschaften von Magnetköpfen und kompletten Magnetkopfanordnungen bei Bandgeräten gemäß dem Oberbegriff des Anspruchs 1.

Bei der Wiedergabe von auf Band aufgezeichneten Signalen, insbesondere Wiedergabe von Videosignalen, kommt es, oftmals sporadisch zu Bildverschlechterungen. Dem Betrachter erscheinen diese Bildverschlechterungen als kleine, schnell bewegliche Zonen, die sich über den ganzen Bildschirm bewegen, was unter anderem auch zu Unschärfen der Bildkonturen führt. Diese Erscheinung ist unter dem allgemeinen Begriff "Rubbing Noise-Effekt" bekannt.

Auslöser dieses Rubbing Noise-Effektes ist eine bestimmte, hier nicht näher erläuterte Paarung von Kopfmaterial, zum Beispiel monokristallinen Ferrit, und speziellem Bandmaterial. Der Effekt tritt bei Verwendung von verschiedenen Bandmaterialien mehr oder weniger häufig auf.

Erfahrungsgemäß handelt es sich bei Auftreten dieses Effektes nicht um Bandschwingungen, sondern um Schwingungen des Kopfmaterials im molekularen Bereich der Kopfoberfläche.

Aufgabe dieser Erfindung ist es, ein Verfahren zu schaffen, mit dem der Rubbing Noise-Effekt vermieden werden kann.

Diese Aufgabe wird durch die im Anspruch 1 gekennzeichneten Merkmale gelöst. Weitere Merkmale des Verfahrens sind in den Unteransprüchen angegeben.

Werden die Köpfe nach ihrer Herstellung, bei der ja die Kopfspiegel-Oberflächen mechanisch bearbeitet wurden, erfindungsgemäß einer Belastung durch Anregung mechanischer Schwingungen von außen ausgesetzt, so tritt beim späteren Betrieb im magnetischen Aufzeichnungsgerät der Rubbing Noise-Effekt nicht mehr auf. Diese Schwingungsbelastung der Köpfe kann durch verschiedene Methoden erreicht werden. Es ist sowohl eine Anregung der Köpfe mit Ultraschall, als auch mittels gepulstem Laser möglich. Es können auch elektrische oder magnetische Wechselfelder eingesetzt werden.

Ein Vorteil dieses Verfahrens ist unter anderem, daß nicht nur neu gefertigte Köpfe behandelt, sondern auch bereits im Betrieb befindliche Köpfe oder Kopfräder repariert werden können.

**Patentansprüche**

1. Verfahren zur Verbesserung der elektromechanischen Eigenschaften von Magnetköpfen und kompletten Magnetkopfanordnungen bei magnetischen Aufzeichnungsgeräten, insbesondere Videoaufzeichnungsgeräten, **dadurch gekennzeichnet,** daß die Köpfe oder Magnetkopfanordnungen einer Schwingungsbelastung durch Anregung mechanischer Schwingungen von außen ausgesetzt werden.

2. Verfahren nach Anspruch 1, **dadurch gekennzeichnet,** daß die Schwingungsbelastung mittels Ultraschall angeregt wird.

3. Verfahren nach Anspruch 1, **dadurch gekennzeichnet,** daß die Schwingungsbelastung mittels gepulster Laserstrahlen angeregt wird.

4. Verfahren nach Anspruch 1, dadurch **gekennzeichnet,** daß die Schwingungsbelastung mittels eines elektrischen oder magnetischen Wechselfeldes angeregt wird.